Europäisches Patentamt

European Patent Office

Office européen des brevets

(19)

(11) Veröffentlichungsnummer: **0 317 713 B1**

## (12) EUROPÄISCHE PATENTSCHRIFT

(45) Veröffentlichungstag der Patentschrift: **23.10.91**

(21) Anmeldenummer: **88113235.1**

(22) Anmeldetag: **16.08.88**

(51) Int. Cl.⁵: **A01G  9/12**, A47G  7/00

(54) Pflanzenstützkorb.

(30) Priorität: **25.11.87 DE 3739947**

(43) Veröffentlichungstag der Anmeldung:
**31.05.89 Patentblatt  89/22**

(45) Bekanntmachung des Hinweises auf die
Patenterteilung:
**23.10.91 Patentblatt  91/43**

(84) Benannte Vertragsstaaten:
**AT BE CH DE ES FR GB GR IT LI LU NL SE**

(56) Entgegenhaltungen:
**DE-U- 8 418 288**
**DE-U- 8 631 101**

(73) Patentinhaber: **Riesselmann & Sohn**
**Brandstrasse**
**W-2842 Lohne/Riessel(DE)**

(72) Erfinder: **Kühling, Franz**
**Apfelweg 6**
**W-2842 Lohne(DE)**

(74) Vertreter: **Müller, Enno Johannes Heinrich et**
**al**
**Postfach 110451 Corneliusstrasse 45**
**W-5600 Wuppertal 11(DE)**

## Beschreibung

Die Erfindung betrifft einen Pflanzenstützkorb nach den Merkmalen des Oberbegriffes des Anspruches 1.

Derartige Pflanzenstützkörbe sind bereits in verschiedener Ausgestaltung bekannt geworden.

Aus dem DE-Gm 84 18 288 ist ein Pflanzenstützkorb bekannt, bei welchem das Ringteil als relativ dünnes, stabförmiges Bauteil ausgebildet ist, und bei welchem darüber hinaus die Rastvorsprünge (vergl. beispielsweise Fig. 6 dieser Druckschrift) als zahnartige Vorsprünge ausgebildet sind, mit einem unteren, horizontal verlaufenden Abschlußbereich.

Darüber hinaus ist noch ein Pflanzenstützkorb bekannt geworden, vergl. DE-GM 86 31 101, die alle Mermale des Oberbegriffs des Anspruchs 1 aufweist, bei welchem das untere Ringteil über seinen Umfang verteilt kreisabschnittsförmige Bereiche aufweist, die sich nach außen auswölben. Die Rastnasen sind beim Gegenstand dieses Gebrauchsmusters derart ausgebildet, daß beim Aufsetzen auf einen Topfrand die untere Fläche der Rastnasen leicht nach außen hin abfallend ausgebildet ist.

Wenn auch die zuvor beschriebenen Pflanzenstützkörbe bereits eine große Verbreitung gefunden haben, so sind sie doch nicht in jeder Hinsicht optimal. Die Ausbildung der Rastnasen bei diesen bekannten Pflanzenstützkörben ergibt zwar ein zufriedenstellendes Aufsetzen auf einen oberen Topfrand des Blumentopfes, nachdem der Blumentopf von oben in den Pflanzenstützkorb eingeführt worden ist und die Rastnasen den Topfrand übersprungen haben. Jedoch ist zu beobachten, daß die Rastnasen bei einer Belastung von oben, wie es im Gärtnereibetrieb, bei einer Verladung und dem Transport mitunter bspw. auftreten kann, von dem Topfrand abrutschen und der Pflanzenstützkorb sich insgesamt nach unten verschiebt. Hierbei kann die Pflanze durch Mitnahme von Blättern, Blüten od. dgl. im oberen Bereich des Pflanzenstützkorbes sogar Beschädigungen erfahren. Ein weiterer Nachteil wird im Zusammenhang mit einer Versendung etwa von mehreren Pflanzenstützkörben zu Abnehmern gesehen. Die Pflanzenstützkörbe werden hierzu gewöhnlich ineinandergesteckt. Beim Auseinanderziehen der einzelnen Pflanzenstützkörbe durch den Verbraucher kann es im Bereich der Rastvorsprünge zu Verhakungen mit dem Ringteil kommen. Das notwendige Manipulieren, um die Pflanzenstützkörbe voneinander zu trennen, wird als lästig empfunden. Bei ungeduldiger Handhabung kann es auch zu Schäden an den Pflanzenstützkörben kommen.

Im Hinblick auf den vorbeschriebenen Stand der Technik stellt sich der Erfindung die Aufgabe, den zunächst angeführten Pflanzenstützkorb derart auszugestalten und weiterzubilden, daß eine bessere Halterung an dem Blumentopf gegeben ist, ohne daß eine Verschlechterung der Sonderung voneinander bei zusammengesteckten Pflanzenstützkörben eintritt.

Diese Aufgabe ist bei der im Anspruch 1 angegebenen Erfindung gelöst,

Zufolge der erfindungsgemäßen Ausgestaltung ist eine wesentlich bessere Halterung der Pflanzenstützkörbe auf dem oberen Topfrand erreicht, da die Rastvorsprünge den Topfrand hintergreifen können. Sie weisen durch die hakenartig nach unten gerichtete Ausformung eine Hinterschneidung auf, in welche der Topfrand eingreifen kann. Die Pflanzenstützkörbe mit derartigen Rastvorsprüngen sind auch leicht voneinander zu sondern, wenn sie etwa in zusammengesteckten Bündeln vorliegen, aufgrund der weiteren erfindungsgemäßen Maßnahme, daß das Ringteil zumindest teilweise, nämlich in solchen Bereichen die beim Auseinanderziehen von ineinandergesteckten Pflanzenstützkörben auf die Rastnasen anderer Pflanzenstützkörbe treffen, radial nach außen abfallende Führungsschrägen aufweist. Beim Auseinanderziehen von etwa ineinandergesteckten Pflanzenstützkörben gleiten die hakenartig nach unten gerichteten Rastvorsprünge auf den Führungsschrägen nach außen ab, was aufgrund der Elastizität der Speichen, an welche die Rastvorsprünge angeformt sind, ohne weiteres möglich ist. Überraschend ergibt sich hierdurch sogar noch eine bessere Sonderbarkeit als bei den bislang bekannten Pflanzenstützkörben.

In Ausgestaltung der Erfindung ist vorgesehen, daß das Ringteil zumindest teilweise zickzackförmig ausgebildet ist und zumindest die Einkerbungen radial nach außen abfallend verlaufen. Bei einer zickzackförmigen Ausbildung gleiten die Rastvorsprünge, wenn sie auf das zickzackförmige Ringteil treffen, von selbst in die Einkerbungen. Bei einer Ausbildung, bei der die Einkerbungen radial nach außen abfallend verlaufen, bzw. radial nach innen ansteigen, ergibt sich von selbst eine Abweiserfunktion des Ringteils, ein Verhaken der Rastvorsprünge an dem Ringteil bei einem Auseinanderziehen von etwa ineinandergesteckten Pflanzenstützkörben tritt nicht auf.

Besonders bevorzugt ist, daß das Ringteil insgesamt radial und abfallend ausgebildet ist. Dies ist herstellungstechnisch einfach und ergibt darüber hinaus noch vorteilhaft eine gewünschte Elastizität des Ringteiles.

Eine besondere Maßnahme wird darin gesehen, das Ringteil derart auszubilden, daß es radial nach innen ansteigende Halterungsvorprünge aufweist. Diese können etwa erhalten werden, wenn man bei einer Ausgestaltung, wie sie zuvor beschrieben worden ist, bei einem zickzackförmigen Ringteil, welches insgesamt radial nach außen abfallend ausgebildet ist, die Zickzackform radial innen senkrecht bzw. entlang eines Zylinders abschneidet. Die Erhebungen der Zickzackform bilden dann von selbst die nach innen ansteigenden Halterungsvorsprünge. Es ergibt sich eine kombinative Wirkung zu den eingangs erwähnten hakenartig nach unten gerichteten Rastvorsprüngen an den Speichen. Der Planzenstützkorb ist nicht nur gegen ein Abrutschen nach unten auf einem Blumentopf gesichert, sondern auch wesentlich besser gegen ein Abziehen nach oben, da die Halterungsvorsprünge an dem Ringteil sich an dem oberen Topfrand (von unten) auch verhaken können. Die Maßnahme, Halterungsvorsprünge an dem Ringteil vorzusehen, hat Bedeutung auch gesondert von einer Ausgestaltung des Ringteils in Zickzackform. Die Schrägung des Ringteils ist bevorzugt derart, daß es sich im Querschnitt in etwa 45° zu einer Horizontalen erstreckt. Eine weitere bevorzugte Maßnahme wird darin gesehen, die Speichen an einem äußeren Randbereich des Ringteiles anzuformen. Hierdurch ergibt sich eine gewisse Hebelwirkung bezüglich eines Verhakens des Ringteils - mittels der Halterungsvorsprünge- an einem oberen Topfrand.

Eine besondere Maßnahme hinsichtlich des oberen Pflanzenstützrings wird darin gesehen, diesen Pflanzenstützring in Umfangsrichtung mit hintereinanderliegenden Ausbiegungen auszubilden. Hiermit ist einerseits der Vorteil erreicht, daß bei einfacher Gebrauchsform ein optimaler Schutz für die Pflanzenstengel erreicht ist und sich auch ein harmonisch gebündeltes Pflanzenbild ergeben kann. Jedem Pflanzenstengel wird praktisch sein eigenes Aufnahmefach zugeordnet, gebildet von der Ausbiegung. Selbst beim Transport, Windangriff, Blumengießen usw. ist mit genügender Sicherheit vermieden, daß sich der Pflanzenstengel in Umfangsrichtung verschiebt.

Eine kombinative Wirkung hinsichtlich der weiter oben beschriebenen Lehre der Erfindung wird auch noch darin gesehen, daß durch die Ausbiegungen in dem Pflanzenstützring, insbesondere bei zickzackförmiger Ausbildung, ein gewisses geordnetes Ineinanderstecken von Pflanzenstützkörben, etwa als Verkaufsbündel, erreicht werden kann. Auch bei einer nur teilweisen Ausbildung der radialen nach außen abfallenden Führungsschrägen kann so Vorkehrung getroffen werden, daß diese Führungsschrägen jeweils mit den hakenartigen Rastvorsprüngen beim Auseinanderziehen der etwa zusammengesteckten Pflanzenstützkörbe zusammenwirken.

Nachstehend wird die Erfindung noch anhand der beigefügten Zeichnung, die jedoch lediglich ein Ausführungsbeispiel darstellt, näher erläutert, auf welcher im einzelnen zeigt:

Fig. 1    eine Seitenansicht des Pflanzenstützkorbes, auf einem Blumentopf befindlich;

Fig. 2    eine perspektivische Darstellung des Pflanzenstützkorbes;

Fig. 3    zwei ineinandergeschachtelte Pflanzenstützkörbe.

Dargestellt und beschrieben ist ein Pflanzenstützkorb mit einem unteren elastisch aufweitbaren Ringteil 2. Dieses ist Form zickzackförmiger Ausbiegungen gestaltet, um in Verbindung mit dem verwendeten Kunststoffmaterial eine elastische Aufweitbarkeit zu erhalten. Dadurch kann dieses Ringteil unter elastischer Spannkraft um die Mantelfläche von Blumentöpfen 4 liegen.

Von diesem elastisch aufweitbaren Ringteil 2, welches die Topfmantelwand umfasst, gehen aufwärts gerichtet die Speichen 3 aus. Diese setzen sich über einen Zwischenring 5 in weiterhin aufwärtsgerichtete Speichen 10 fort. Der Zwischenring 5 liegt so, daß er sich bereits oberhalb des Topfrandes 11 erstreckt. Um den Topf zu sichern, besitzen die Speichen 3 die einwärtsgerichteten hakenförmig nach unten weisenden Rastvorsprünge 7, die über den Topfrand 11 auskragen. Dieses Auskragen erfolgt im Rahmen der schnepperförmigen Ausweichbewegung beim Einsetzen des Topfes 4 in das untere Ringteil 2.

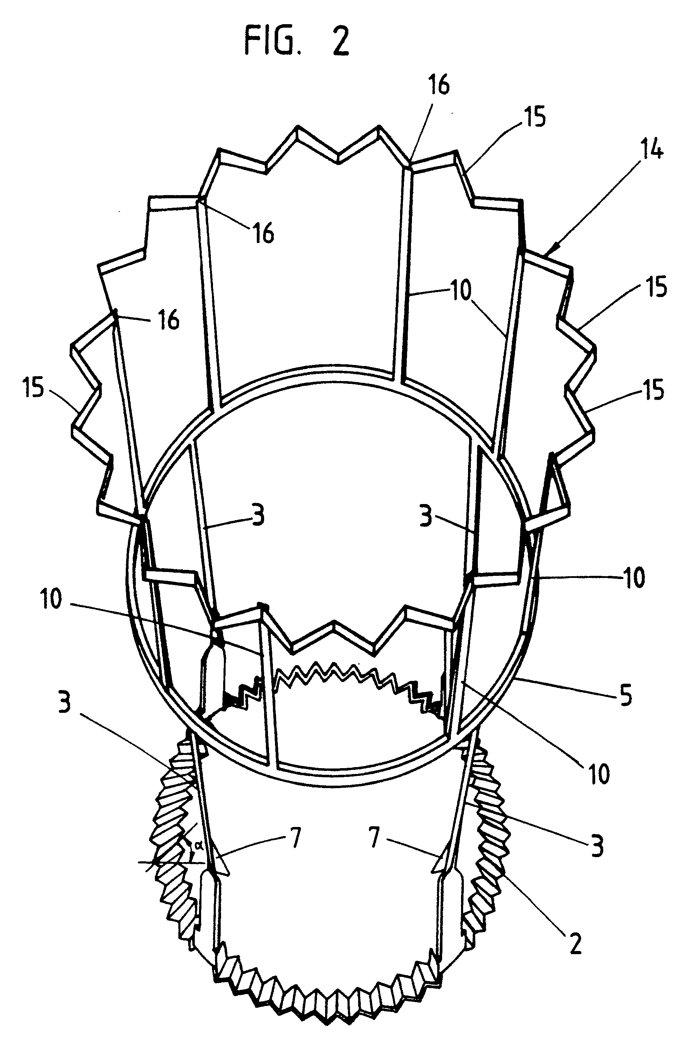

Das untere Ringteil 2 weist Einkerbungen 8 und in zickzackförmiger Abwechslung mit den Einkerbungen 8 nach innen ansteigende Halterungsvorsprünge auf, welche jeweils nach außen abfallend ausgebildet sind. Wie sich beispielsweise aus Fig. 2 ergibt, sind die Einkerbungen 8 bzw. die Halterungsvorsprünge so ausgerichtet, daß sie mit der Horizontalen etwa einen Winkel Alpha von 45° einschließen.

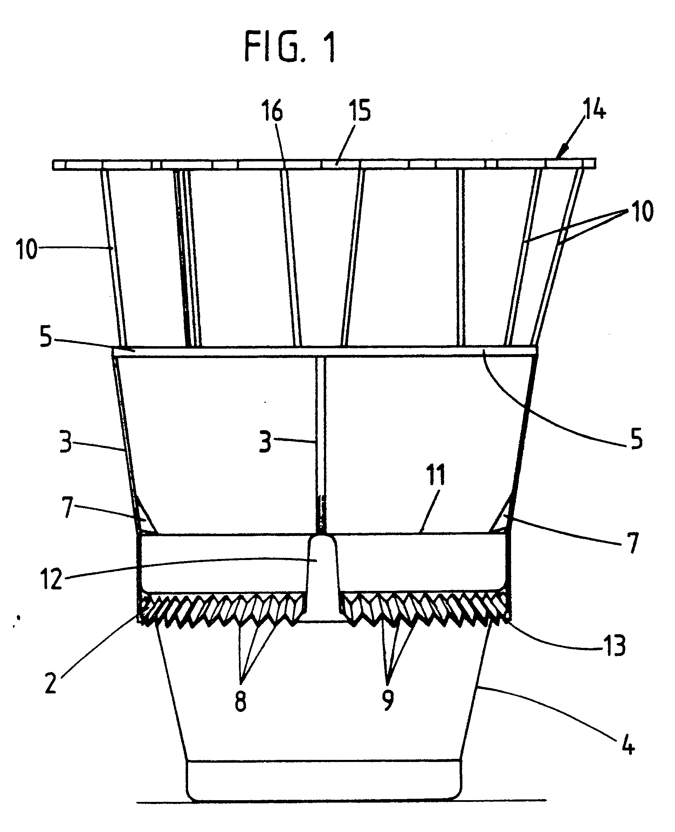

Die Speichen 3 sind über Verbindungslaschen 12 an einem äußeren Randbereich 13 des Ringteiles 2 angeformt, wie sich insbesondere etwa aus Fig. 1 ergibt. Hierdurch entsteht zwischen dem inneren Ende der Halterungsvorsprünge 9 und dem Angriffsort der Speiche 3 bzw. der Verbindungslaschen 12 ein als Hebelarm wirkender Abstand, welcher einen festen Sitz des Pflanzenstützkorbes an einem Blumentopf 4 zusätzlich unterstützt.

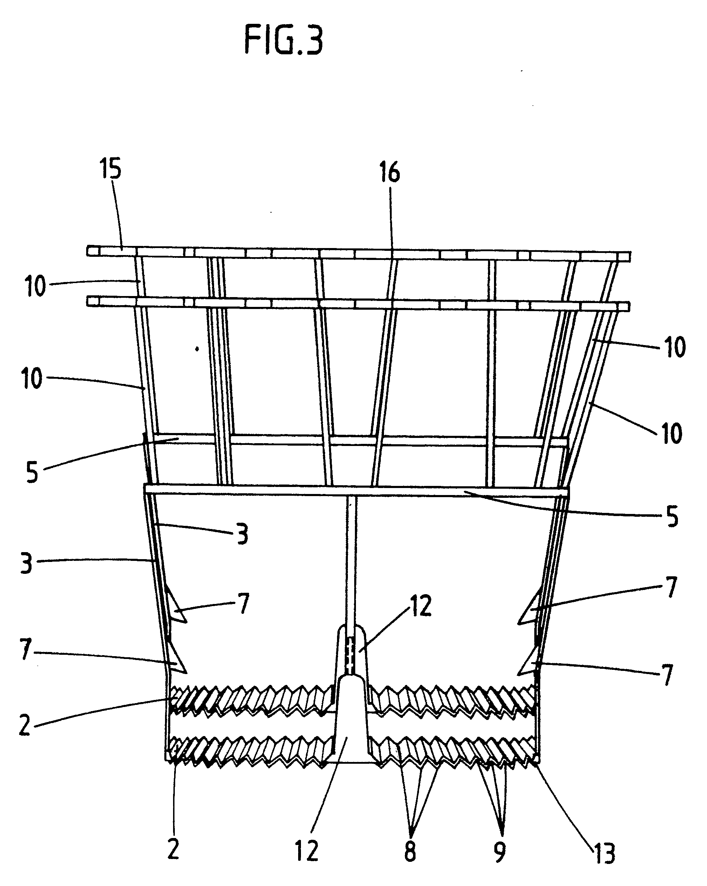

Wie sich insbesondere aus Fig. 3 ergibt, wirken die hakenartig nach unten gerichteten Rastvorsprünge 7 und das insgesamt schräg nach außen abfallende Ringteil 2 bei zusammengesteckten Pflanzenstützkörben derart zusammen, daß die Vorsprünge 7 bei einem Auseinanderziehen der Pflanzenstützkörbe auf dem Ringteil 2 nach außen abgleiten, was aufgrund der Elastizität der Speichen 3 ohne weiteres möglich ist. Die Pflanzenstützkörbe lassen sich so ohne weiteres voneinander abziehen. Bei dem dargestellten Ausführungsbeispiel in Fig. 2 gleiten bei einem Auseinanderziehen der Pflanzenstützkörbe die unteren Rastvorsprünge 7 an dem oberen Ringteil 2, welches zu dem oberen Pflanzenstützkorb gehört, ab.

Mit Bezug insbesondere zu Fig. 2 sei erläutert, daß sich die oberhalb des Zwischenringes 5 erstreckenden weiteren Speichen 10 in den oberen Pflanzenstützring 14 münden, welcher insgesamt zickzackförmig ausgebildet ist. Dieser ist querschnittsgrößer als das untere Ringteil 2 und auch als der Zwischenring 5. Die Speichen sind also im wesentlichen nach einer Kegelstumpfmantelfläche ausgerichtet. Dabei sitzen die oberen Speichen 10 winkelversetzt zu den unteren Speichen 3.

Der obere Pflanzenstützring 14 ist in Form mehrerer in Umfangsrichtung hintereinanderliegender Ausbiegungen 15 gestaltet. Diese sind durch eine Zickzackform erreicht. Die Ebene der Ausbiegungen 15 liegt etwa parallel zum Topfrand 11. Die Speichen 10 sitzen an den Umkehrpunkten 16 dieser Ausbiegungen 15 an. Die Zickzackausbiegungen 15 des oberen Pflanzenstützringes 14 sind hinsichtlich ihres Ausbiegungsmaßes größer als diejenigen des Ringteiles 2. Der oberen Pflanzenstützring 14 ist im Querschnitt etwa rechteckig gestaltet mit gebrochenen Randkanten.

Wie weiter vorne schon erläutert, kann die Form des oberen Pflanzenstützringes 14 kombinativ zu einer guten Schachtelbarkeit von Pflanzenstützkörben etwa in Verkaufsbündeln beitragen.

**Patentansprüche**

1. Pflanzenstützkorb mit einem unteren, elastisch aufweitbaren Ringteil (2) zum Umfassen einer Topfmantelwand, davon aufwärtsgerichtet ausgehenden Speichen (3), die zu einem über dem Ringteil (2) liegenden querschnittsgrößeren Pflanzenstützring führen, wobei die Speichen (3) einen oder mehrere Rastvorsprünge (7) aufweisen, zur Abstützung auf einem oberen Topfrand, dadurch gekennzeichnet, daß die Rastvorsprünge (7) hakenartig nach unten gerichtet sind und daß das Ringteil (2) zumindest teilweise radial nach außen abfallende Führungsschrägen (8, 9) aufweist.

2. Pflanzenstützkorb nach Anspruch 1, dadurch gekennzeichnet, daß das Ringteil (2) zumindest teilweise zickzackförmig ausgebildet ist und zumindest die Einkerbungen (8) nach radial außen abfallend verlaufen.

3. Pflanzenstützkorb nach Anspruch 2, dadurch gekennzeichnet, daß das Ringteil (2) insgesamt nach radial außen abfallend ausgebildet ist.

4. Pflanzenstützkorb nach einem der Ansprüche 1 bis 3, dadurch gekennzeichnet, daß das Ringteil (2) radial nach innen ansteigende Halterungsvorsprünge aufweist.

5. Pflanzenstützkorb nach einem der Ansprüche 1 bis 4, dadurch gekennzeichnet, daß das Ringteil 2 im Querschnitt sich etwa in 45° zu einer Horizontalen erstreckt.

6. Pflanzenstützkorb nach einem der Ansprüche 1 bis 5, dadurch gekennzeichnet, daß die Speichen 3 an einem äußeren Randbereich des Ringteils (2) angeformt sind.

7. Pflanzenstützkorb nach einem oder mehreren der vorhergehenden Ansprüche, dadurch gekennzeichnet, daß der oberen Pflanzenstützring (14) in Umfangsrichtung hintereinanderliegende Ausbiegungen bildet.

8. Pflanzenstützkorb nach einem oder mehreren der vorhergehenden Ansprüche, dadurch gekennzeichnet, daß der oberen Pflanzenstützring (14) in Umfangsrichtung zickzackförmig verläuft.

9. Pflanzenstützkorb nach einem oder mehreren der vorhergehenden Ansprüche, dadurch gekennzeichnet, daß weiteren Speichen (10) an den Umkehrpunkten (16) der Ausbiegungen (15) ansetzen.

10. Pflanzenstützkorb nach einem oder mehreren der vorhergehenden Ansprüche, dadurch gekennzeichnet, daß weiteren Speichen (10) in den inneren Umkehrpunkten (16) der Ausbiegungen (15) ansetzen.

11. Pflanzenstützkorb nach einem oder mehreren der vorhergehenden Ansprüche, dadurch gekennzeichnet, daß das Ringteil (2) in kleineren Zickzack-Ausbiegungen verläuft als der oberen Pflanzenstützring

**Claims**

1. Plant support basket having a lower, flexibly expandable ring part (2) for surrounding a pot casing wall, spokes (3) emerging therefrom in an upwards direction which lead to a plant support ring of larger cross-section which is located above the ring part (2), the spoken (3) having one or more catch projections (7), for supporting on an upper pot rim, characterised in that the catch projections (7) are directed downwards in the manner of hooks and that the ring part (2) has, at least in part, guide slopes (8, 9) which fall away radially towards the outside.

2. Plant support basket according to Claim 1, characterised in that the ring part (2) is constructed, at least in part, in a zig-zag shape and at least the notches (8) fall away radially towards the outside.

3. Plant support basket according to Claim 2, characterised in that the ring part (2) is constructed in total as falling away radially towards the outside.

4. Plant support basket according to one of Claims 1 to 3, characterised in that the ring part (2) has retaining projections ascending radially towards the inside.

5. Plant support basket according to one of Claims 1 to 4, characterised in that the ring part (2) extends at approximately 45° to a horizontal in cross-section.

6. Plant support basket according to one of Claims 1 to 3, characterised in that the spokes (3) are moulded onto an outer edge region of the ring part (2).

7. Plant support basket according to one or more of the preceding claims, characterised in that the upper plant support ring (14) forms bent-out portions (15) located one behind the other in the circumferential direction.

8. Plant support basket according to one or more of the preceding claims, characterised in that the upper plant support ring (14) extends in a zig-zag shape in the circumferential direction.

9. Plant support basket according to one or more of the preceding claims, characterised in that additional spokes (10) attach to the turning points (16) of the bent-out portions (15).

10. Plant support basket according to one or more of the preceding claims, characterised in that additional spokes (10) attach in the inner turning points (16) of the bent-out portions (15).

11. Plant support basket according to one or more of the preceding claims, characterised in that the ring part (2) extends in smaller zig-tag bent-out portions than the upper plant support ring.

**Revendications**

1. Corbeille destinée à servir de support pour des plantes, comprenant une partie annulaire inférieure, élastique, déployable, destinée à entourer une paroi d'enveloppe du pot d'où partent des rayons (3) dirigés vers le haut, et qui conduisent à un anneau de support de plantes de plus grande section transversale et situé au-dessus de la partie annulaire (2), les rayons (3) présentant au moins une saillie d'arrêt (7) destinée à venir s'appuyer sur un bord supérieur du pot, caractérisée en ce que les saillies d'arrêt (7) en forme de crochet sont dirigées vers le bas et en ce que la partie annulaire (2) comporte des biseaux de guidage (8, 9), tombant vers l'extérieur de façon au moins partiellement radiale.

2. Corbeille destinée à servir de support pour des plantes selon la revendication 1, caractérisée en ce que la partie annulaire (2) est réalisée au moins partiellement en zig-zag et en ce qu'au moins les entailles (8) présentent un profil tombant radialement vers l'extérieur.

3. Corbeille destinée à servir de support pour des plantes selon la revendication 2, caractérisée en ce que la partie annulaire (2) présente une forme tombant dans sa totalité radialement vers l'extérieur.

4. Corbeille destinée à servir de support pour des plantes selon l'une des revendications 1 à 3 caractérisée en ce que la partie annulaire (2) comporte des saillies de support montant radialement vers l'intérieur.

5. Corbeille destinée à servir de support pour des plantes selon l'une des revendications 1 à 4, caractérisée en ce que lu partie annulaire (2) s'étend en section à environ 45° par rapport à une horizontale.

6. Corbeille destinée à servir de support pour des plantes selon l'une des revendications 1 à 5, caractérisée en ce que les rayons (3) sont conformés sur une zone de bordure extérieure de la partie annulaire (2).

7. Corbeille destinée à servir de support pour des plantes selon l'une ou plusieurs des revendications précédentes,caractérisée en ce que l'anneau supérieur (14) d'appui des plantes forme, en surplomb de la partie annulaire (2), des pliures (15) disposées les uns derrière les autres sur la périphérie.

8. Corbeille destinée à servir de support pour des plantes selon l'une ou plusieurs des revendications précédentes, caractérisée en ce que l'anneau supérieur (14) d'appui des plantes a présente à la périphérie une forme on zig-zag.

9. Corbeille destinée à servir de support pour des plantes selon l'une ou plusieurs des revendications précédentes, caractérisée en ce que des rayons supplémentaires (10) partent des points de changement de direction (16) des pliures (15).

10. Corbeille destinée à servir de support pour des plantes selon l'une ou plusieurs des revendications précédentes, caractérisée en ce que des rayons supplémentaires (10) partent des points intérieurs de changement de direction des pliures (15).

11. Corbeille destinée à servir de support pour des plantes selon l'une ou plusieurs des revendications précédentes, caractérisée en ce que la partie annulaire (2) présente des pliures en zig-zag plus petites que celles de l'anneau supérieur d'appui des plantes.

# FIG. 1

# FIG. 2

# FIG.3